# EUROPEAN PATENT APPLICATION

(11) **EP 1 369 185 A2**
(43) Date of publication of application: **10.12.2003**
(21) Application number: 03008421.4
(22) Date of filing: 11.04.2003
(51) Int. Cl.: B06B 1/02

(54) **Device for driving an ultrasonic transducer at an optimal frequency**

(30) Priority: 04.06.2002 US 161790
(71) Applicant: Coltene/Whaledent, Inc., Mahwah, New Jersey 07430 (US)
(72) Inventor: Gofman, Igor Y. c/o Coltene/Whaledent, Inc., Mahwah, New Jersey 07430 (US); Colombo, Joseph G. c/o Coltene/Whaledent, Inc., Mahwah, New Jersey 07430 (US)
(74) Representative: Grättinger & Partner (GbR)

(57) **Abstract**

An ultrasonic driver determines an optimal operating frequency for an ultrasonic transducer, and drives the transducer at its optimal frequency. A microcontroller controlling a MOSFET driver selectively alters the operating frequency of the transducer until a maximum operating current is detected by a transducer performance detector. The transducer performance detector provides an acknowledgment signal to the microcontroller upon detecting the maximum operating current, causing the microcontroller to lock the operating frequency at the current, optimal value.

## Description

### BACKGROUND OF THE INVENTION

### Cross-Reference to Related Application

The present application is related to US SN 10/161,773, entitled "Microcontroller Unit", filed concurrently with the US priority application to the present one on June 4, 2002 by inventors common to the present one, and which is hereby incorporated by reference.

### Field of Invention

The present invention relates generally to the field of transducers. More specifically, the present invention relates to ultrasonic scaler transducers.

### Discussion of Prior Art

Piezo-electric devices are well known in the prior art. An important aspect of a piezo-electric device is that it operates at an optimum frequency at which its impedance is lowered near a minimum value. This optimal frequency provides for the best performance of a piezo-electric device.

One use of piezo-electric devices is in the field of dentistry, where such a device may be used in a scaler. For best performance, the device needs to be driven at an optimal frequency. It should, however, be noted that a common problem associated with prior art scalers is that the operating frequency is based upon various factors including: the particular mass of the scaler tip, the shape, and the water load in a water spray at the end. These factors (and many others) cause variation in the optimum operating frequency for the device.

Prior art devices are simply provided with a preset frequency that is considered optimum, and factors such as change of mass and other environmental factors are not taken into account. Thus, due to these factors, a device may operate at a frequency other than its optimal frequency for a particular configuration. Therefore, to overcome the limitations of the prior art, there is a need to be able to dynamically monitor and determine the optimal frequency associated with a scaler, and then to set the frequency accordingly.

The following references describe prior art in the field of piezo-electric devices, in general.

The U.S. patent to Isono (3,992,679), assigned to Sony Corporation, provides for a locked oscillator having a control signal derived from output and delayed output signals. Disclosed within the patent is a stabilized frequency oscillating circuit having a voltage-controlled variable frequency oscillator with a closed control loop to lock the oscillator to a predetermined frequency. It should be noted that the oscillator described in this patent is used to compare phase.

The U.S. patent to Balamuth et al. (4,012,647), assigned to Ultrasonic Systems, Inc., provides for ultrasonic motors and converters. Disclosed within the patent is a transducer means having a pair of piezoelectric crystals attached to a removable tip. A third crystal forms a part of a sensing means for detecting a frequency of the ultrasonic motor. Additionally, the feedback signal is utilized by the converter to adjust itself. It should be noted that this patent provides for a power oscillator with feedback.

The U.S. patent to Hetzel (5,059,122), assigned to Bien-Air S.A., provides for a dental scaler. Disclosed within the patent is a dental scaler having a vibrating piezoelectric transducer and an amplifier connected to the transducer. The transducer has a series of piezoelectric chips for vibrating the head of a scaler. The series of piezoelectric chips are coupled with electrodes in such a manner to define an input, an output, and two feeder terminals receiving a low direct voltage from an external source of voltage. The input and output of the amplifier are connected to the input and output of the transducer respectively for forming an oscillator. The transducer is connected to the scaler to form a resonator and the amplifier forms a maintenance circuit. The transducer vibrates at its resonant frequency.

The U.S. patent to Sharp (5,451,161), assigned to Parkell Products, Inc., provides for an oscillating circuit for ultrasonic dental scaler. Disclosed within the patent is an oscillating circuit, which is automatically tuned to vibrate a scaler insert at its resonant frequency in response to an impedance of an energizing coil.

The U.S. patent to Sharp (5,730,394), assigned to Parkell Products, Inc., provides for an ultrasonic dental scaler selectively tunable either manually or automatically. Disclosed is an ultrasonic dental scaler, which has a selectively tunable oscillator circuit coupled to an energizing coil L_{HND}. It generates a control signal having an oscillation frequency associated with the energizing coil L_{HND}. An oscillator circuit U1 includes a switch S3 which is operatively coupled to automatic and manual timers in order to alter the oscillation frequency. The oscillator circuit U1 is a phase-locked loop with a phase comparator. It should be noted that the U.S. patent 6,190,167 B1 teaches along similar lines.

The U.S. patent to Sale et al. (5,927,977) assigned to Professional Dental Technologies, Inc., provides for a dental scaler. Disclosed is a dental scaling system having an ultrasonic transducer to vibrate the scaling tip. Handpiece control electronics control the electrical energy provided to the heater and the ultrasonic transducer.

The U.S. patent to Boukhny et al. (5,938,677), assigned to Alcon Laboratories, Inc., discloses a control system for a phacoemulsification handpiece. The control system includes a digital signal processor (DSP) for measuring responses of a phacoemulsification handpiece to a varying drive signal from voltage source VCO, and for comparing these responses to determine the probable value of the actual series resonance fₛ (the peak of admittance curve). The DSP controls the current I of the drive signals constant with a PID control logic. The patent describes a unit that scans a range, measures the admittance (ratio of current to drive voltage), stores the parameters, analyzes the amplitudes, and calculates an average.

The U.S. patent to Alexandre et al. (5,739,724), assigned to Sollac and Ascometal S.A., provides for control of an oscillator for driving power ultrasonic actuators. Disclosed within the patent is a power generator for providing controlled electric power to the ultrasonic actuators. A voltage/current measurement circuit measures the voltage and current supplied by the power generator. The circuit supplies a computer with signals representative of the strength of the current and of the phase between the voltage and the current. The computer controls an interface which drives the power generator. The operator can set the frequency range, type of search (resonance or anti-resonance), and voltage used for the search.

The U.S. patent to Noma et al. (6,144,139), assigned to Murata Manufacturing Co., Ltd., provides for a piezoelectric transformer inverter. Disclosed within the patent is a piezoelectric transformer converter that has a step-up ratio as a function of a driving frequency. The load current is controlled to be constant with different step-up ratios and frequencies.

The U.S. patent to Sakurai (6,019,775), assigned to Olympus Optical Co., Ltd., provides for an ultrasonic operation apparatus having a common apparatus body usable for different handpieces. Disclosed within the patent is a handpiece having an ultrasonic oscillation element, a phase locked loop (PLL) circuit and a current detection section. The PLL circuit tracks the resonant frequency f3 of element and generates a correspondent signal. A current phase signal detected at the current detection section is sent to the PLL circuit. The phase at the ultrasonic oscillation element is set to zero degrees.

The German patent to Wieser (DE 2,929,646), assigned to Medtronic GmbH, provides for an oscillator for dental treatment that has a multivibrator supplying a signal via an RC element to a switching transistor with the transducer winding connected at the collector circuit of transistor. The collector circuit is connected via a diode to an integration stage. The oscillator generates pulses whose frequency can be corrected by a closed loop control voltage.

The German patent to Sturm (DE 2,011,299) provides for an ultrasonic generator which includes an amplifier (coupled in an oscillator configuration) for initiating, via an exciting impedance, ultrasonic vibrations in an electro-acoustic element such as that associated with a dental instrument.

The German patent to Teichmann (DE 3,136,028) provides for a magnetostrictive ultrasonic oscillator circuit. Disclosed within the patent is a flip-flop circuit used as a variable-frequency ultrasonic generator for a dental hand piece. A hand piece coil L is fed by the variable-frequency ultrasonic generator, which can be tuned to resonance frequency. An RC feed back (R7-9, C2) with two different time constants, dependent on the inductive load current of the coil L, is used for frequency determination of the ultrasonic generator.

The German patent to Weiser (DE 2,459,841) provides electrical drive and control for ultrasonic dental equipment that has an oscillator supplying an impulse signal for a transformer. Disclosed within the patent is a magnetostrictive transformer (of a tartar deposit removing instrument), which is provided with impulse signals from the oscillator. The oscillator (a multivibrator) has its frequency stabilized by an open-loop/closed loop control voltage. The open-loop/closed loop control signal derived from the current through the transducer is fed to the oscillator for fine-tuning the frequency.

Whatever the precise merits, features and advantages of the above cited references, none of them achieves or fulfills the purposes of the present invention.

### SUMMARY OF THE INVENTION

The present invention provides for a dental scaler device that comprises a microcontroller, a driver and a transducer performance detector. The transducer performance detector monitors and detects the best performance (i.e., optimal frequency) of a transducer of the scaler with the help of the microcontroller. The microcontroller provides a drive frequency to the driver, and continually adjusts the frequency until an optimal performance is detected by the transducer performance detector. When an optimal performance is detected, the frequency of optimal performance is identified and locked for a period of operation.

The microcontroller includes a digital frequency generator providing a multiplicity of frequencies. Each time the frequency is adjusted, the transducer is driven at the selected frequency and the driver current is measured by the transducer performance detector. This process continues as the microcontroller continues, for example, stepping the frequency upward or downward in increments, with the driver current measured each time. When the driver current reaches a peak, a signal is fed back to the microcontroller instructing it to lock in place the currently selected frequency (i.e., an optimal frequency) corresponding to the peak current. The microcontroller then drives the transducer at the locked optimal frequency, thereby allowing for operation of the transducer at its best performance setting.

### BRIEF DESCRIPTION OF THE DRAWING

A more complete understanding of the invention may be obtained by reading the following description of specific illustrative embodiments of the invention in conjunction with the appended drawing in which:
Figure 1 illustrates the concept of piezo transducer resonance;
Figure 2 illustrates a block diagram representative of a preferred embodiment of the present invention;
Figure 3 illustrates the "chase effect" as implemented in the peak comparator of Figure 2;
Figure 4A-4G show timing diagrams associated with various nodes in Figure 2;
Figure 5 illustrates a detailed system diagram of the microcontroller in Figure 2;
Figure 6 illustrates a prior art piezo driver circuit; and
Figure 7 illustrates a flowchart describing the methodology associated with the preferred embodiment of the present invention.

### DESCRIPTION OF THE PREFERRED EMBODIMENTS

While this invention is illustrated and described in a preferred embodiment, the dental scaler device may be produced in many different configurations, forms and materials. There is depicted in the drawing, and will herein be described in detail, a preferred embodiment of the invention, with the understanding that the present disclosure is to be considered as an exemplification of the principles of the invention and the associated functional specifications for its construction and is not intended to limit the invention to the embodiment illustrated. Those skilled in the art will envision many other possible variations within the scope of the present invention.

In the preferred embodiment, the transducer is a piezo-electric transducer, although other equivalents such as a magnetostrictive transducer can be used without departing from the scope of the present invention.

The present invention provides for a system and a method for identifying an optimal frequency associated with a transducer, and driving the transducer at the optimal frequency. In the preferred embodiment, the transducer is an ultrasonic piezo-electric scaler transducer for use in dental applications. It should be noted that the specific implementation of the present invention as a dental scaler is for illustrative purposes only, and should not be used to restrict the scope of the present invention.

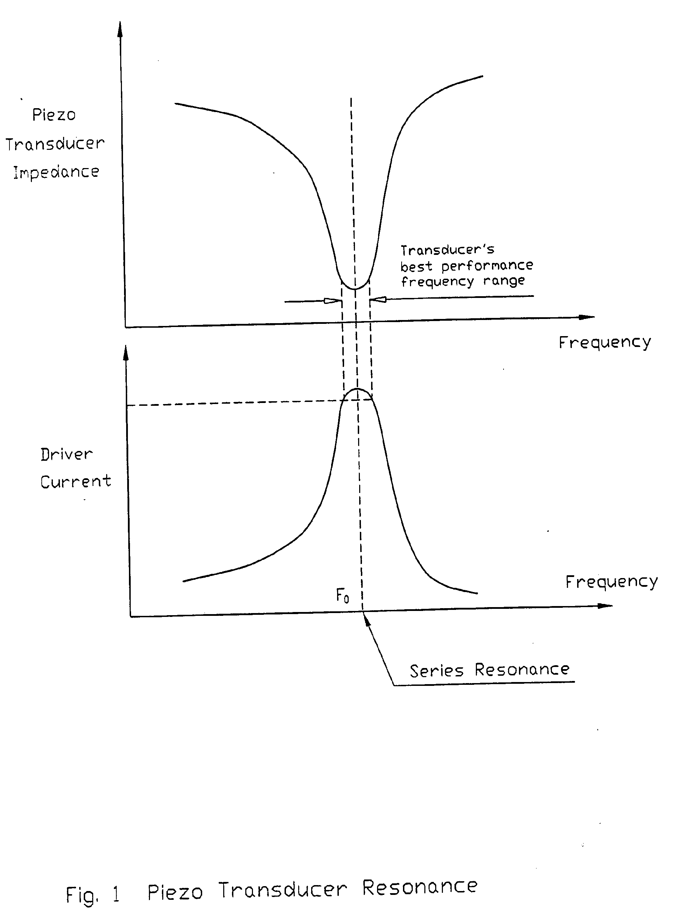

As illustrated in Figure 1, the best performance with regard to the piezo-electric scaler is obtained at its transducer's series resonance Fo. At this series resonance, the transducer's impedance drops to its lowest possible value. Concurrently, at the lowest impedance value, the driver current reaches its highest point.

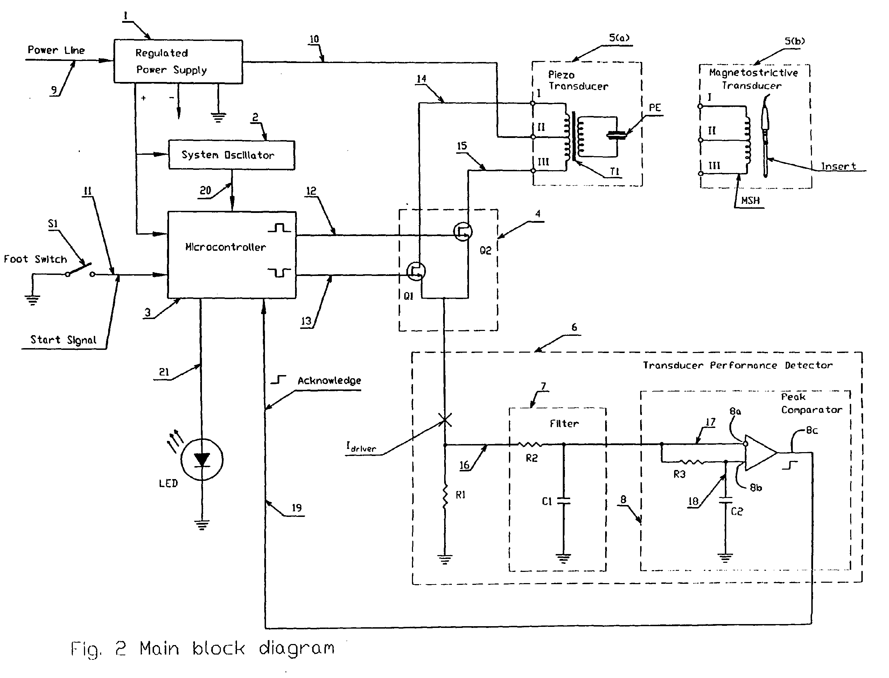

Figure 2 illustrates a block diagram of the preferred embodiment of the system of the present invention. Figure 2 shows that the piezo element 5(a) is driven by transformer T1, which is in turn driven by MOSFET driver 4 (comprising MOSFETs Q1 and Q2), and by the regulated power supply 1. A sensing resistor R1 is connected in series with the MOSFET driver 4. A voltage. developed across R1, is correlated to a current flow in the driver 4 (I_{driver}), which is further correlated with a current flow through piezo element PE. It should be noted that, as mentioned earlier, the piezo transducer 5(a) is used merely to illustrate the preferred embodiment, and one skilled in the art can easily extend it to include other equivalent transducers such as a magnetostrictive transducer 5(b), also shown in Figure 2.

The system of Figure 2 is activated by pressing down foot switch S1, which in turn enables microcontroller 3 to provide signals 12, 13 at an incremented scanning frequency to driver 4. The scanning frequency is produced by microcontroller 3, regulated by system oscillator 2. When the best performance of the piezo transducer 5(a) is detected by transducer performance detector 6, an output acknowledge signal 19 causes microcontroller 3 to lock the chosen frequency.

The best performance of piezo element PE is detected by sensing a voltage developed across resistor R1. This voltage signal 16 is filtered by RC circuit 7 (R2 and C1), whose output at node 17 is fed into a peak comparator 8. The peak comparator 8 directly receives the output signal at a negative input 8a, as well as a delayed signal at node 18 via R3 and C2 fed directly into a positive input 8b. An output 8c of this comparator directs acknowledge signal 19 to the microcontroller 3 to stop scanning and lock a current frequency when a maximum current I_{driver} has been reached.

The peak comparator 8 employs a "chase effect" which tracks the waveform developed by transducer 5a as it is correlated to the voltage across resistor R1. While microcontroller 3 operates in the scanning mode, the signal at the node 18 always trails the signal at node 17. When the trailing signal at node 18 reaches the peak of its comparison, the signal at node 17 has already lessoned in voltage, and the voltage at node 18 becomes greater than the voltage at node 17. Comparator 8 recognizes this event as a trigger to stop scanning, and outputs acknowledge signal 19 to microcontroller 3 in response.

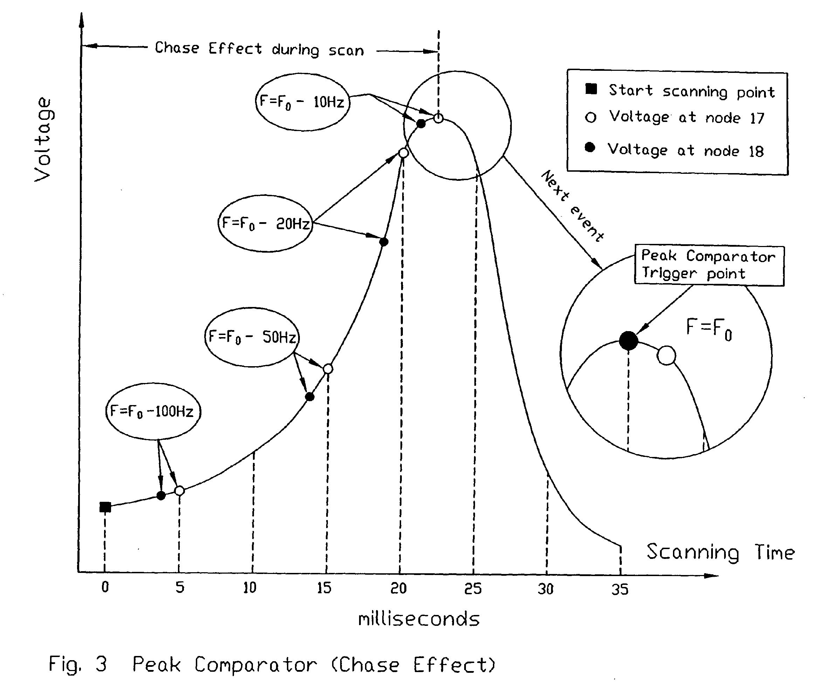

Figure 3 illustrates the chase effect during frequency scanning as implemented in the peak comparator 8. Voltages at nodes 17 and 18 are compared by peak comparator 8 of Figure 2. The voltage at node 17 is greater than that of node 18, until the peak F=Fo is reached as shown in the inset of Figure 3. The inset illustrates the peak comparator trigger point after which the signal at node 18 is greater than that of node 17. At this position, peak comparator 8 effectively identifies the frequency corresponding to the peak by signaling microcontroller 3 of Figure 2 via acknowledge signal 19 to lock onto the current frequency as the optimal frequency.

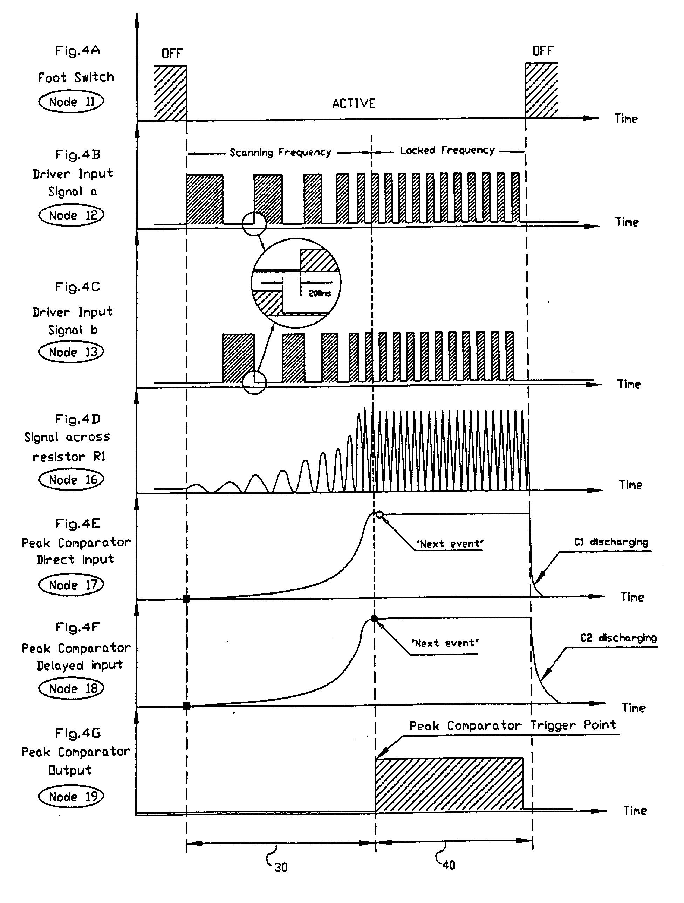

Figures 4A-4G provide timing diagrams at various nodes (11, 12 , 13, 16, 17, 18 and 19) introduced in Figure 2. In Figure 4A, node 11 becomes active with operation of foot switch S1 of Figure 2 by exhibiting a logical "0" output. As shown in Figures 4B and 4C, microcontroller 3 responds by outputting driver input signals at nodes 12, 13 to MOSFET driver 4 of Figure 2. In a preferred embodiment of the present invention, as illustrated in insets to Figures 4B and 4C, the input signal at node 13 is arranged to trail the input signal at node 12 by approximately 200 nanoseconds. This delay helps to eliminate undesirable current switching noise from being supplied by MOSFET driver 4 of Figure 2 to piezo element 5(a). Without this delay, switching noise might otherwise be elevated by simultaneously operating more than one of driver transistors Q1, Q2 of driver 4 in an "On" state.

Figure 4D illustrates voltage signal 16 across resistor R1 of Figure 2, which as depicted in Figure 4D incrementally increases in frequency during scanning frequency period 30 until being locked at optimum frequency during locked frequency period 40. Figures 4E, 4F respectively illustrate voltages at nodes 17 and 18 of Figure 2 as a function of time. At a peak comparator trigger point between periods 30 and 40, the voltages on curves 4E, 4F that are labeled as "Next event" illustrate the chase effect depicted in Figure 3. Specifically, and as shown in the inset to Figure 3, the "Next Event" voltage at node 17 of Figure 4E is diminished from the "Next Event" voltage at node 18 of Figure 4F. This condition triggers comparator 8 of Figure 2 to generate acknowledge signal 19 (further described with respect to Figure 4G). Discharging regions on the timing curves 4E, 4F for nodes 17, 18 are respectively associated with and influenced by capacitors C1 and C2 of Figure 2, which allow the affected voltages at nodes 17, 18 to dissipate when I_{driver} terminates at the conclusion of period 40.

It can be seen that after the peak comparator trigger point, the operating frequency at node 16 is steady. As shown in Figure 4G and Figure 2, peak comparator 8 recognizes at the peak comparator trigger point that a maximum performance level has been reached, and provides acknowledge signal 19 in order to lock microcontroller 3 and driver 4 at an optimal operating frequency equal to the currently selected frequency. Operation continues at this frequency during locked frequency period 40.

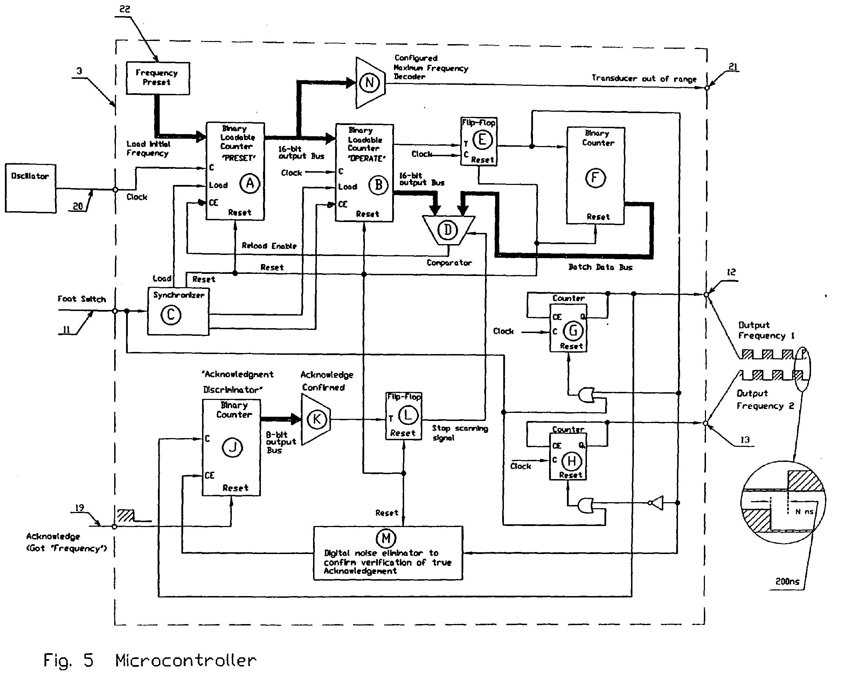

A more detailed description of the operations of microcontroller 3 with reference to Figures 2, 5 is next presented. As shown in Figure 2, the function of the microcontroller 3, when the footswitch S1 is activated, is to provide an incrementing frequency (scan frequency) to the piezo transducer 5(a) (or manetostrictive transducer 5(b)), via MOSFET driver 4. Upon detection of an optimal frequency (by transducer performance detector 6), acknowledge signal 19 instructs the microcontroller to stop incrementing, and to output only the currently selected frequency to the scaler transducer.

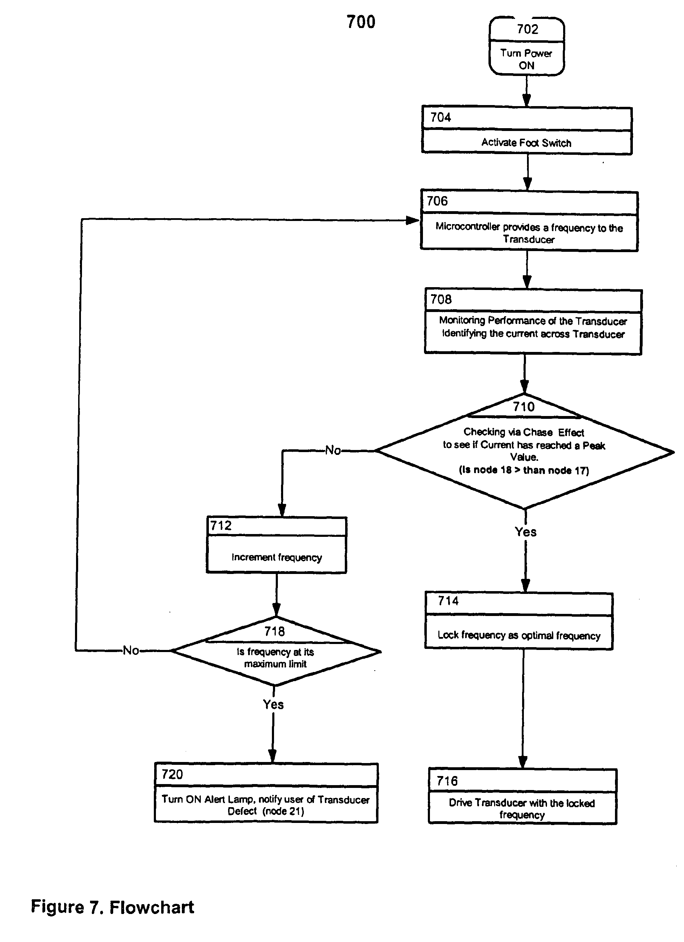

Most ultrasonic transducers vibrate between 22Khz and 50Khz. If a best performance is not detected during the scanning process, microcontroller 3 is capable of indicating, via a signal supplied to node 21 of Figure 2 (for example to illuminate an LED or other display attached to output 21), that the transducer is not responding. This signal may indicate to an operator, for example, that the transducer is defective. These operating processes are further described in conjunction with the flow chart of Figure 7.

In a preferred embodiment of the present invention, transducer 5a includes a piezo-electric crystal within a hand piece, and a dental scaler that is placed at the end of the hand piece. When the power is turned on, the piezo-electric device begins to vibrate and causes the scaler tip to vibrate, wherein the vibrations of the tip are used for example to scrape teeth.

Figure 5 provides a functional diagram for microcontroller 3. When the microcontroller 3 is powered-up and foot switch node 11 is OFF, all of the outputs are at a logical "0" state.

The moment that foot switch node 11 is switched ON, and acknowledge signal 19 remains high (logical "1"), outputs 12, 13 initially provide output signals oscillating at a starting frequency fₛₜₐᵣₜ. Starting frequency fₛₜₐᵣₜ is then stepped in predetermined increments as shown, for example, during the scanning frequency period 30 of Figure 4D. This process continues until acknowledge signal 19 is brought to a logical "0," at which point the scanning or stepping process is disabled. When scanning is disabled, the currently selected frequency is provided by microcontroller 3 until foot switch node 11 is switched OFF.

As illustrated in Figure 5, when a logical "0" is applied to node 11, counter A is loaded, via synchronizer C, with frequency preset 22. Frequency preset 22 represents the desired starting frequency fₛₜₐᵣₜ. Counter A presents the frequency preset 22 onto its 16-bit output bus. Synchronizer C loads that data into counter B, which presents that data onto its 16-bit output bus, and enables counter B to begin its count. When counter B completes its count, it triggers flip-flop E, which in turn supplies a logical "1" to counter F, to a reset of counter G, and through an inverter a logical "0" to a reset of counter H.

Counter G and counter H are configured with a predetermined delay between their outputs (as earlier described with reference to the inset figure of Figures 4B, 4C). This delay contributes to a separation of on and off time between the outputs, which operate alternately to each other with each completed count. As illustrated by Figures 4B, 4C, and with reference to Figure 2, signal pulses produced at nodes 12, 13 alternatively and respectively drive transistors Q2, Q1 of driver 4 in order to generate an alternating current through nodes 14, 15 for operating transformer T1 of piezo transducer 5 (a). The delay eliminates switching noise that might be otherwise elevated by simultaneously operating transistors Q2 , Q1 in an "ON" state.

Counter J and acknowledge confirmed circuit K monitor the acknowledge signal 19. Once acknowledge signal 19 is confirmed, the output of acknowledge confirmed circuit K triggers flip-flop L and disables comparator D. Comparator D sends a logical "0" to counter A, and disables any further change to its output. As a result, the microcontroller locks outputs 12, 13 at the currently selected frequency.

Near the time that operation of microcontroller 3 is initiated by start signal 11, it is possible that a false acknowledge signal 19 could terminate the scanning frequency operation of microcontroller 3. In order to avoid this possibility, digital noise eliminator M controls operation of counter J at initiation. While start signal 11 has not been provided, eliminator M disables counter J. After start signal 11 is provided, eliminator counts several time periods (for example, totaling on the order of a few milliseconds) before enabling counter J.

Acknowledge input 19 is primarily designed for the purpose of having load device 5(a) feed back a resonate signal to the microcontroller 3 to disable the scanning process once the scanning frequency has reached a resonate or optimum frequency for the load device. Once the scanning process is disabled, the currently selected output frequency is locked by microcontroller 3 for continued operation. Thus, the load device is powered at this point at a resonate frequency, which allows the load device to operate at its best performance.

An output signal "Transducer out of range" is provided by maximum frequency decoder N at node 21 to indicate that the transducer load (piezo or electromechanical device) is defective. This output will be active only if the scanning frequency reaches a predetermined limit and the acknowledge signal 19 remains at a logical "1".

As earlier described with reference to Figures 2, 4B and 4C, typical push-pull or bridge output drivers 4 of Figure 2 may experience current switching noise, for example, as one transistor driver Q1 could switch on at the exact time the other transistor driver Q2 switches off. As a result, it is quite conceivable that both drivers could be on the same time. The outputs 12, 13 of the microcontroller 3 of Figure 5 are designed to drive driver 4 so that there is no overlap in on/off relationship. A suitable separation between on and off output drive signals at nodes 12, 13 is provided, for example, by microcontroller 3 (see, for example, the inset in Figure 5 illustrating 200 nanoseconds of separation provided by microcontroller 3). This separation is achieved as a result of output timing delays provided by counters G, H.

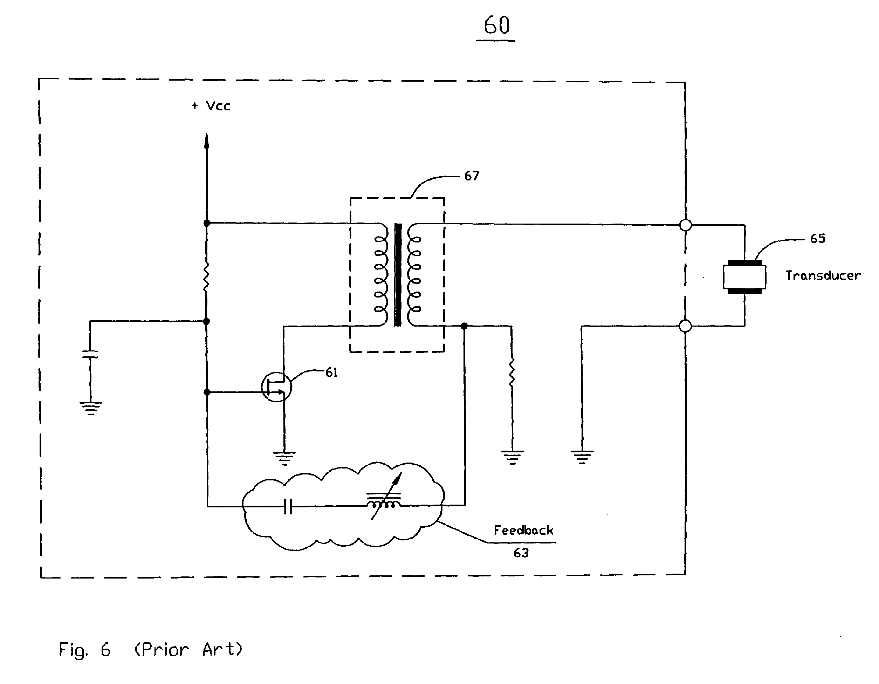

In addition to providing a mechanism for selecting and operating an ultrasonic driver at an optimum frequency and driver current, the present invention provides an additional operational advantage over the prior art which is herewith explained. Figure 6 illustrates a typical prior art feedback driver circuit 60 for a piezo transducer. In the circuit of Figure 6, feedback circuit 63 provides an oscillatory signal to the gate of transistor 61 that permits an oscillatory current flow through transistor 61 in order to cause an oscillatory voltage to appear across a primary winding of transformer 67. This oscillatory voltage induces an oscillatory voltage in a secondary winding of the transformer 67, which drives piezo transducer 65. Impedance characteristics of transducer 65 affect the oscillatory signal provided by feedback circuit 63.

For example, if a mechanical force is applied to the piezo transducer 65, the impedance of transducer 65 increases, and the output current through the secondary winding of transformer 67 decreases, and thereby, the feedback current produced by feedback circuit 63 decreases. If sufficient mechanical force is applied to transducer 65, the feedback current may decrease below a minimum level required to cause an oscillatory current through transistor 61 (according to Nyquist's criteria). In this case, the circuit 60 ceases to oscillate, and transducer 65 effectively stalls.

With reference to Figure 2, in sharp contrast, Applicants' invention does not employ transducer-based feedback in order to regulate the operating frequency of the transducer. Rather, Applicants' invention employs microcontroller 3 and driver 4 to operate piezo element PE of transducer 5(a) over a range of possible frequencies, detects an optimal frequency via transducer performance detector 6, and locks the operating frequency at the optimum via microcontroller 3. In other words, microcontroller 3 regulates operating frequency without using ongoing feedback from piezo element PE of transducer 5(a). As a result, and unlike the prior art, Applicants' driver will not stall in the event that a significant mechanical force is applied to piezo element PE of transducer 5(a).

Figure 7 illustrates a method 700 associated with a preferred embodiment of the present invention. The method begins at step 702 with power being applied to the associated circuitry. In step 704, a foot switch is operated to initialize the frequency selection process. In step 706, microcontroller 3 proceeds to provide an initial operating frequency to driver circuit 4. Typically, this will be a lowest frequency safely below an expected optimum operating frequency for an associated class of transducers. In step 708, performance of the transducer at the current frequency is monitored as a function of operating current through the transducer. In step 710, a "chase effect" detection method (as described earlier) is employed to determine whether the operating current has reached a maximum or peak value. If a maximum has not been reached, the frequency is incremented by a predetermined amount in step 712. Alternatively, in an analogous method beginning with a frequency safely above an expected optimal operating frequency for the transducer class, the frequency is decremented by a predetermined amount in step 712.

As long as a boundary limiting frequency is not detected in step 718, steps 706, 708, 710, 712 and 718 continue to cycle until an operating current maximum is detected in step 710. The boundary limiting condition may be a maximum operating frequency limit if microcontroller 3 is scanning by incrementing frequency, or may be a minimum operating frequency limit if microcontroller 3 is scanning by decrementing frequency.

Once maximum current is detected in step 710, an associated frequency is selected (locked) for operation in step 714, and the associated transducer is driven at the locked frequency in step 716. Alternatively, if a boundary limiting frequency is detected in step 718, a transducer defect signal is produced at node 21 of microcontroller 3 (as earlier described with reference to Figure 2). The signal at node 21 may be used, for example, to light a lamp for visually indicating this condition to a user.

A system and method has been shown in the above embodiments for the effective implementation of an ultrasonic driver. While various preferred embodiments have been shown and described, it will be understood that there is no intent to limit the invention by such disclosure, but rather, it is intended to cover all modifications and alternate constructions falling within the spirit and scope of the invention, as defined in the appended claims. For example, the present invention should not be limited by type of transducer, order of scanned frequency, specific hardware, or software/program driving the device.

## Claims

1. A device for driving a transducer at an optimal frequency, said device comprising:
a driver circuit for providing power to the transducer at an operating frequency selected from a predetermined frequency range;
a controller for adjustably providing an operating frequency over the predetermined range to control the driver circuit; and
a transducer performance detector for detecting a transducer operating current and identifying a peak value in the transducer operating current, wherein the detector provides a signal to the controller to lock the operating frequency when the detector determines that the locked frequency causes a peak value in the transducer operating current.

2. A device for driving a transducer at an optimal frequency, as per claim 1, wherein said transducer is an ultrasonic transducer selected from the group consisting of piezo transducers and magnetostrictive transducers.

3. A device for driving a transducer at an optimal frequency, as per claim 2, wherein said transducer is a piezo transducer and said locked operating frequency operates independently from a mechanical force applied to the piezo transducer.

4. A device for driving a transducer at an optimal frequency, as per claim 1, wherein said range of frequencies are traversed by incrementing either positively or negatively from a starting frequency.

5. A device for driving a transducer at an optimal frequency, as per claim 5, wherein said transducer performance detector further comprises a comparator for comparing a first transducer operating current associated with a first operating frequency and a second transducer operating current associated with a second operating frequency incremented from the first operating frequency, wherein said comparator provides the controller signal when the first transducer operating current exceeds the second transducer operating current.

6. A device for driving a transducer at an optimal frequency, as per claim 5, wherein said transducer performance detector further comprises a filter for filtering said current signals compared by said peak comparator .

7. A device for driving a transducer at an optimal frequency, as per claim 1, wherein said device is used in conjunction with a dental scaler.

8. A device for driving a transducer at an optimal frequency, as per claim 1, wherein said driver circuit comprises a push-pull driver.

9. A device for driving a transducer at an optimal frequency, as per claim 1, wherein said device further comprises a display for indicating a status of said ultrasonic transducer.

10. A device for driving a transducer at an optimal frequency, as per claim 1, wherein said device further comprises a switch for activating said device.

11. A method for identifying an optimal frequency associated with a transducer, said method comprising the steps of:
a. identifying a frequency range for scanning;
b. selecting a start frequency from said identified frequency range;
c. driving said transducer beginning with said start frequency as an operating frequency, and monitoring a change in a current level through said transducer;
d. incrementing said operating frequency from said start frequency until said monitored current substantially reaches a peak value;
e. locking said operating frequency corresponding to said peak current value, said peak value corresponding to said optimal frequency; and
f. driving said transducer at said locked frequency.

12. A method for identifying an optimal frequency associated with a transducer, as per claim 11, wherein said transducer is selected from the group consisting of piezo transducers and magnetostrictive transducers.

13. A method for identifying an optimal frequency associated with a transducer, as per claim 11, wherein said range of frequencies are traversed by incrementing either positively or negatively from said start frequency.

14. A method for identifying an optimal frequency associated with a transducer, as per claim 11, wherein the peak value is a fist transducer current value associated with a first operating frequency, the peak value being determined by comparing the first transducer current with a second transducer current value associated with a second operating frequency incremented from the first operating frequency and finding that the first transducer current exceeds the second transducer current.

15. A method for identifying an optimal frequency associated with a transducer, as per claim 11, wherein said method further comprises the step of filtering said monitored current.

16. A method for identifying an optimal frequency associated with a transducer, as per claim 11, wherein said method further comprises the step of indicating a transducer's status via a display.

17. A method for identifying an optimal frequency associated with a transducer, as per claim 11, wherein said transducer drives a dental scaler.

18. A method for identifying optimal frequency associated with a piezo-electric scaler transducer, said method comprising the-steps of:
a. identifying a frequency range for scanning;
b. selecting a start frequency from said identified frequency range;
c. driving said piezo electric scaler transducer at said start frequency as an operating frequency, and monitoring a change in a current level through across said piezo-electric scaler transducer;
d. incrementing said operating frequency from said start frequency until said monitored current reaches a substantially peak value;
e. locking said operating frequency corresponding to said peak current value, said peak value corresponding to said optimal frequency; and
f. driving said piezo-electric scaler transducer at said locked frequency for optimal performance.

19. A method for identifying optimal frequency associated with a piezo-electric scaler transducer, as per claim 18, wherein said range of frequencies are traversed by incrementing either positively or negatively from said start frequency.

20. A method for identifying optimal frequency associated with a piezo-electric scaler transducer, as per claim 18, wherein the peak value is a first transducer current value associated with a first operating frequency, the peak value being determined by comparing the first transducer current with a second transducer current value associated with a second operating frequency incremented from the first operating frequency and finding that the first transducer current exceeds the second transducer current.

21. A method for identifying optimal frequency associated with a piezo-electric scaler transducer, as per claim 18, wherein said method further comprises the step of filtering said monitored current before checking said monitored current for said peak value.

22. A method for identifying optimal frequency associated with a piezo-electric scaler transducer, as per claim 18, wherein said method further comprises the step of indicating a piezo-electric scaler transducer status via a display.
